(19) **Europäisches Patentamt / European Patent Office / Office européen des brevets**

(11) **EP 4 522 982 B1**

(12) **FASCICULE DE BREVET EUROPEEN**

(45) Date de publication et mention de la délivrance du brevet:
**29.04.2026 Bulletin 2026/18**

(21) Numéro de dépôt: **23726928.7**

(22) Date de dépôt: **11.05.2023**

(51) Classification Internationale des Brevets (IPC):
**G01N 23/046** *(2018.01)*  **G01B 15/04** *(2006.01)*
**G06T 7/60** *(2017.01)*

(52) Classification Coopérative des Brevets (CPC):
**G01N 23/046; G01B 15/045;** G01N 2223/305;
G01N 2223/63

(86) Numéro de dépôt international:
**PCT/EP2023/062537**

(87) Numéro de publication internationale:
**WO 2023/217929 (16.11.2023 Gazette 2023/46)**

(54) **PROCÉDÉ, SYSTÈME ET PROGRAMME D'ORDINATEUR DE CONTRÔLE D'UNE PIÈCE PAR RADIOGRAPHIE AUX RAYONS X**

VERFAHREN, SYSTEM UND COMPUTERPROGRAMM ZUR RÖNTGENINSPEKTION EINES TEILS

METHOD, SYSTEM AND COMPUTER PROGRAM FOR THE X-RAY INSPECTION OF A PART

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **12.05.2022 FR 2204535**

(43) Date de publication de la demande:
**19.03.2025 Bulletin 2025/12**

(73) Titulaires:
- **Centre National de la Recherche Scientifique (CNRS)**
  **75016 Paris (FR)**
- **SAFRAN**
  **75015 Paris (FR)**
- **Ecole Normale Supérieure Paris-Saclay**
  **91190 Gif-sur-Yvette (FR)**

(72) Inventeurs:
- **FRAGNAUD, Cédric**
  **77550 MOISSY-CRAMAYEL (FR)**
- **REMACHA, Clément**
  **77550 MOISSY-CRAMAYEL (FR)**
- **ROUX, Stéphane**
  **93110 ROSNY-SOUS-BOIS (FR)**
- **BETANCUR, Julian**
  **77550 MOISSY-CRAMAYEL (FR)**

(74) Mandataire: **Regimbeau**
**20, rue de Chazelles**
**75847 Paris Cedex 17 (FR)**

(56) Documents cités:
**WO-A1-2018/014138    WO-A1-2020/217036**

- **FRAGNAUD CÉDRIC ET AL: "CAD-based x-ray CT calibration and error compensation", MEASUREMENT SCIENCE AND TECHNOLOGY, IOP, BRISTOL, GB, vol. 33, no. 6, 29 March 2022 (2022-03-29), XP020419397, ISSN: 0957-0233, [retrieved on 20220329], DOI: 10.1088/1361-6501/ AC5133**

**Description**

## DOMAINE TECHNIQUE

Le domaine de l'invention est celui du contrôle non destructif par radiographie aux rayons X de pièces, par exemple des pièces aéronautiques telles que des aubes de turbine.

## TECHNIQUE ANTÉRIEURE

Le contrôle non destructif (CND) des pièces aéronautiques est un élément essentiel de la sûreté de fonctionnement des avions dont l'objectif est d'éviter tout défaut qui pourrait provoquer une défaillance en vol. Parmi les méthodes de CND, la radiographie aux rayons X se distingue par sa capacité à visualiser l'intérieur de la pièce de manière peu intrusive et à résoudre des détails jusqu'à une taille micrométrique.

Une radiographie aux rayons X normalisée est interprétée comme une image de l'atténuation des rayons X lors de la traversée de la pièce, atténuation elle-même reliée à l'épaisseur traversée par une loi qui est souvent approximée par une fonction exponentielle comme pour la loi de Beer-Lambert.

La tomographie consiste en l'acquisition d'un ou plusieurs milliers de radiographies lors d'une rotation, la plupart du temps complète, d'une pièce dans le but de calculer une image tridimensionnelle complète de la pièce. L'important temps d'acquisition de ces images tomographiques conduit les industriels à ne considérer qu'un nombre limité d'images radiographiques (de l'ordre d'une dizaine) pour réaliser le CND de santé matière et dimensionnel.

La sanction de pièce par radiographie aux rayons X à partir d'un faible nombre de vues est habituellement effectuée manuellement : des contrôleurs, techniciens spécialistes formés à cette tâche, analysent les images à la recherche de toute variation anormale des niveaux de gris.

Toutefois, des artefacts d'images altèrent ces niveaux de gris, rendant incertaine et difficile la sanction car lorsqu'un faible nombre d'images est considéré, les artefacts d'images ont un fort poids et ne peuvent pas être négligés. Pour des tensions d'accélération autour de 350 keV, typiquement utilisées pour acquérir des images d'aube de turbine, les artefacts à traiter sont essentiellement le durcissement de faisceau et la diffusion Compton.

Par ailleurs, une variabilité inter et intra contrôleur existe, réduisant la fiabilité de la sanction. Enfin, l'analyse minutieuse des images par les contrôleurs constitue un travail laborieux et fatiguant.

Cédric Fragnaud et al. CAD-based X-ray CT calibration and error compensation. Measurement Science and Technology, IOP Publishing, vol. 33, n° 6, 065024, (2022) https://iopscience.iop.org/article/10.1088/1361-6501/ac5133 propose une solution de CND basée sur la comparaison entre des images radiographiques acquises et simulées. Cette solution exploite un modèle de référence de la pièce inspectée, typiquement son modèle de conception assistée par ordinateur CAO, pour apporter une connaissance *a priori* permettant d'effectuer une calibration basée sur l'alignement des images acquises et simulées.

Une autre approche est divulguée dans WO 2018/014138 A1 qui divulgue un procédé comprenant l'acquisition d'une séquence d'images radiographiques de l'article; la détermination d'une position de l'article pour chacune des images radiographiques acquises; et l'exécution d'une boucle de correction d'un modèle tridimensionnel qui comprend, de manière itérative : la production d'une image radiographique simulée pour chaque position déterminée de l'article et la comparaison des images radiographiques simulées et des images radiographiques acquises.

## EXPOSÉ DE L'INVENTION

L'invention a pour objectif de fournir une solution de CND permettant, avec un nombre limité d'images radiographiques, de caractériser avec un haut niveau de fiabilité la géométrie 3D d'une pièce et sa conformité dimensionnelle.

Pour ce faire, l'invention propose de venir générer un modèle d'une pièce inspectée rendant mieux compte de la géométrie 3D réelle de la pièce qu'un modèle de référence qui lui rend compte d'une géométrie attendue de la pièce. Plus particulièrement l'invention propose un procédé de contrôle non destructif d'une pièce selon la revendication 1, un système de contrôle non destructif selon la revendication 13 et un produit programme d'ordinateur selon la revendication 14.

Les modes de réalisation préférés de l'invention sont décrits dans les revendications dépendantes.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma d'un système de modélisation volumique d'une pièce selon un mode de réalisation possible de l'invention ;
- la figure 2 est un schéma représentant différentes étapes d'un procédé de modélisation volumique d'une pièce selon un mode de réalisation possible de l'invention ;
- la figure 3 illustre une modélisation possible d'une sous-partie d'intérêt de type trou de perçage.

## EXPOSÉ DÉTAILLÉ DE MODES DE RÉALISATION PARTICULIERS

L'invention concerne un procédé et un système de contrôle non destructif fondé sur une modélisation volumique d'une pièce présentant une surface externe et potentiellement une ou plusieurs cavités internes. La pièce est typiquement, mais non nécessairement, une pièce composée d'un seul matériau. La pièce peut être réalisée selon différents procédés de fabrication, par exemple par fonderie à la cire perdue ou par fabrication additive. L'invention trouve application au contrôle non destructif de pièces aéronautiques, typiquement des aubes de turbine, à l'issue de leur fabrication ou lors d'opérations de maintenance afin d'y détecter d'éventuels défauts pouvant par exemple provoquer une défaillance en vol.

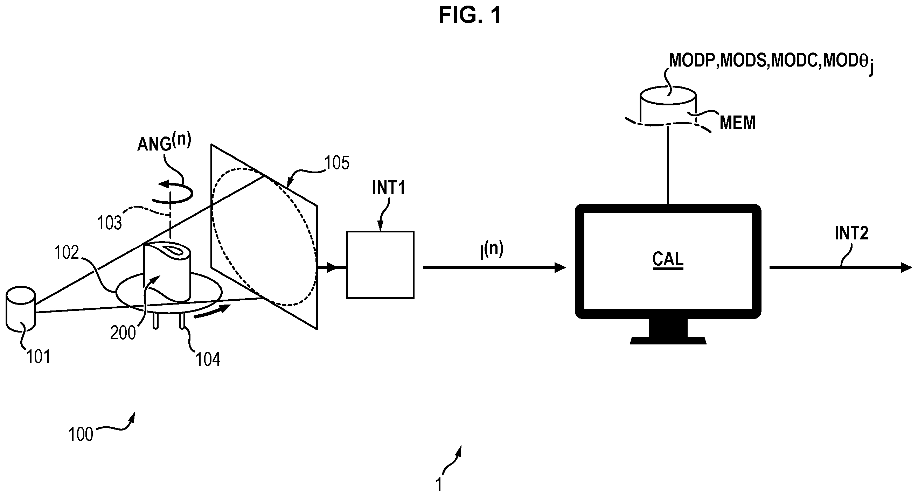

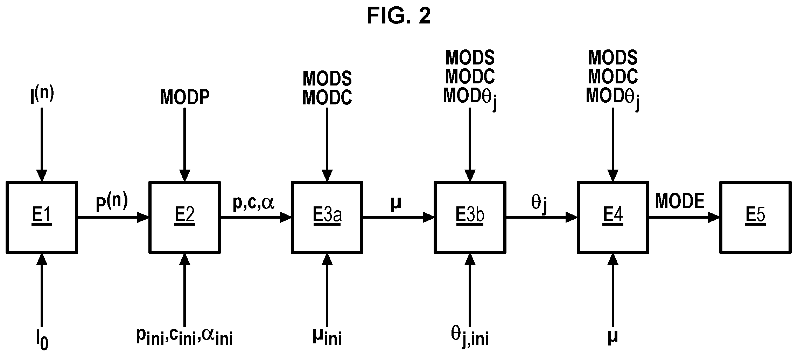

En référence aux figures 1 et 2, le système 1 de modélisation volumique comporte un dispositif 100 de radiographie aux rayons X permettant d'acquérir des images d'une pièce réelle 200 selon différents angles de projection. Ces images sont notées $I^{(n)}$ où n désigne le numéro de l'un des angles de projection ou encore de l'une des vues de la pièce.

Le système de contrôle non destructif 1 de la pièce 200 comporte, et le procédé de contrôle non destructif de la pièce 200 utilise, un ou plusieurs calculateurs CAL. Le calculateur CAL peut être ou comprendre un ou plusieurs ordinateurs, un ou plusieurs serveurs, une ou plusieurs machines, un ou plusieurs processeurs, un ou plusieurs microprocesseurs, une ou plusieurs mémoires permanentes MEM, une ou plusieurs mémoires vives MEM. Le calculateur CAL peut comprendre une ou plusieurs interfaces physiques INT1 d'entrée de données, une ou plusieurs interfaces physiques INT2 de sortie de données. Cette ou ces interfaces physiques INT1 d'entrée de données peuvent être ou comprendre un ou plusieurs claviers d'ordinateur, un ou plusieurs ports physiques de communication de données, un ou plusieurs écrans tactiles, ou autres. Cette ou ces interfaces physiques INT2 de sortie de données peuvent être ou comprendre un ou plusieurs ports physiques de communication de données, un ou plusieurs écrans, ou autres. Un programme d'ordinateur peut être enregistré et exécuté sur le calculateur CAL et comporter des instructions de code, qui lorsqu'elles sont exécutées sur celui-ci, mettent en œuvre tout ou partie du procédé de modélisation volumique de la pièce 200 suivant l'invention, dont la réception des images $I^{(n)}$ au cours de l'étape E1.

Le dispositif 100 de radiographie aux rayons X comporte une source 101 de rayons X, un support 102 sur lequel se trouve la pièce 200, un mécanisme 104 de contrôle pour faire tourner le support 102 et la source 101 l'un par rapport à l'autre 101 autour d'un axe 103 de rotation, pouvant être par exemple vertical (par exemple la source 101 est fixe et le support 102 est mis en rotation autour de l'axe 103), un détecteur 105 des rayons X traversant la pièce 200, la pièce 200 se trouvant donc sur le trajet des rayons X entre la source 101 et le détecteur 105. La source 101, le support 102 et le détecteur 105 sont disposés dans une cabine à rayons X de haute puissance. Le détecteur 105 fournit les images $I^{(n)}$ de la pièce permettant de calculer des projections $P^{(n)}$ de la pièce 200 au cours d'une première étape E1 du procédé selon l'invention. Le mécanisme 104 de contrôle est contrôlé pour l'acquisition à N angles ANG(n) de projection, différents les uns des autres, de la pièce 200 vis-à-vis des rayons X, par le détecteur 105, de N images $I^{(n)}$. N est un entier naturel prescrit, supérieur ou égal à 1. L'entier naturel n va de 1 à N et désigne le numéro de l'angle ANG(n) de projection respectif et donc le numéro de l'image $I^{(n)}$ acquise et de la projection $P^{(n)}$ calculée. Le dispositif 100 de radiographie permet ainsi à l'étape E1 de calculer N projections $P^{(n)}$ du volume de la pièce 200 sous respectivement les N angles ANG(n) de projection. Une réalisation de $P^{(n)}$ est $P^{(n)} = -\log(I^{(n)}/I_0)$ où $I^{(n)}$ désigne une image d'intensité des rayons X ayant traversés la pièce pour la vue n et $I_0$ l'image de blanc (i.e. l'image captée par le détecteur en l'absence de pièce). L'important temps d'acquisition des images acquises par rayons X conduit à ne considérer qu'un nombre limité N de projections $P^{(n)}$, typiquement inférieur à 100.

Une étape de calibration E2, postérieure à la première étape E1, peut être mise en œuvre par le calculateur CAL afin d'identifier les paramètres d'un modèle paramétrique décrivant la formation des images $I^{(n)}$ et rendant compte de phénomènes se produisant au cours de l'acquisition, comme la diffusion Compton et le durcissement du faisceau. Cette étape E2 vise plus particulièrement à estimer des paramètres représentatifs de la géométrie projective du dispositif de radiographie 100 et à estimer des paramètres d'un modèle d'artefacts d'images attendus pour le matériau constituant la pièce et la puissance du faisceau de rayons X utilisé.

Cette étape E2 exploite un modèle numérique de référence MODP de la pièce en tant que connaissance a priori. Ce modèle MODP, qui peut être enregistré à l'avance dans la mémoire MEM du calculateur CAL, est une référence géométrique de la pièce 200 par exemple un modèle de conception assistée par ordinateur (ou CAO en abréviation) de la pièce 200, reproduisant une pièce 200 idéale. Ce modèle MODP peut tenir compte de la composition du matériau de la pièce 200.

Partant de ce modèle numérique de référence MODP de la pièce 200, le calculateur CAL peut simuler des radiographies attendues de la pièce. Le calculateur peut ainsi générer des projections simulées correspondant aux projections observées (i.e. les projections calculées à partir des images acquises) selon les différents angles de projection. Les paramètres représentatifs de la géométrie projective du dispositif de radiographie sont pris en considération lors de cette génération. Par ailleurs, les paramètres du modèle d'artefacts d'images peuvent être utilisées pour reproduire dans les images simulées ou corriger dans les images acquises les artefacts.

La détermination de ces différents paramètres peut être réalisée en suivant la procédure détaillée dans l'article suscité et dont une rapide description est donnée ci-dessous.

Pour l'estimation de la géométrie projective, il convient de déterminer un vecteur $\boldsymbol{p}$ de paramètres $p_i$ de projection lors de l'acquisition des images selon les différents angles de projection. Pour les artefacts il convient de déterminer un vecteur $\boldsymbol{c}$ de paramètres $c_k$ d'étalonnage de durcissement de faisceau du rayonnement et un vecteur $\alpha$ de paramètres $\alpha_j$ de l'effet de la diffusion Compton sur les images acquises selon les différents angles de projection. La différence ou résidu $\rho^{(n)}$ entre $P^{(n)}$, la projection observée pour la vue numéro n, et $\tilde{P}^{(n)}$, la projection simulée pour la vue numéro n, est minimisée par rapport aux paramètres contenus dans les vecteurs $\boldsymbol{p}$, $\boldsymbol{c}$ et $\alpha$. L'équation suivante établit le calcul du résidu pour la vue numéro $n$ : $\rho^{(n)}(\boldsymbol{x}; \boldsymbol{p}, \boldsymbol{c}, \alpha) = P^{(n)}(\boldsymbol{x}) - \tilde{P}^{(n)}(\boldsymbol{x}; \boldsymbol{p}, \boldsymbol{c}, \alpha)$ où $\boldsymbol{x}$ désigne un pixel du détecteur de rayons X.

L'équation suivante établit le calcul de la projection simulée numériquement $\tilde{P}^{(n)}$ en utilisant les vecteurs de paramètres $\boldsymbol{p}$, $\boldsymbol{c}$ et $\alpha$ seulement. Elle formalise comment la projection simulée numériquement encode la géométrie de projection entre la cabine et la pièce avec le vecteur $\boldsymbol{p}$, les phénomènes de durcissement de faisceau avec le vecteur $\boldsymbol{c}$ et la fonction $u$, et le phénomène de diffusion Compton avec le paramètre $\alpha$ et le noyau de convolution K.

$$\tilde{P}^{(n)}(\boldsymbol{x};\ \boldsymbol{p}, \boldsymbol{c}, \boldsymbol{\alpha}) = u\big(\hat{P}^{(n)}(\boldsymbol{x};\ \boldsymbol{p});\ \boldsymbol{c}\big) * K(\boldsymbol{x}; \boldsymbol{\alpha})$$

avec $\hat{P}^{(n)}(\boldsymbol{x};\boldsymbol{p})$ la projection simulée pour l'épaisseur de matière traversée dans la pièce pour la vue numéro $n$ en utilisant le vecteur $\boldsymbol{p}$ et le modèle de référence de la pièce MODP, $u(y; \boldsymbol{c})$ une fonction définie par le vecteur $\boldsymbol{c}$ pour étalonner l'épaisseur traversée $y = \hat{P}^{(n)}(\boldsymbol{x};\ \boldsymbol{p})$ et donc modéliser le phénomène de durcissement de faisceau de rayonnement, $*$ l'opérateur de convolution, et $K(\boldsymbol{x}; \alpha)$ un noyau de convolution au pixel $\boldsymbol{x}$. La convolution avec le noyau $K(\boldsymbol{x}; \alpha)$ définie par le vecteur $\alpha$ modélise l'effet de la diffusion Compton.

La détermination des paramètres contenus dans les vecteurs $\boldsymbol{p}$, $\boldsymbol{c}$ et $\alpha$ permettant de minimiser les résidus peut exploiter des champs de sensibilité en suivant une procédure itérative à trois étapes comme cela est décrit dans l'article suscité, cette procédure itérative exploitant des estimations initiales $p_{ini}$, $c_{ini}$ et $\alpha_{ini}$ des vecteurs $\boldsymbol{p}$, $\boldsymbol{c}$ et $\alpha$.

On a vu précédemment que le modèle numérique de référence MODP représente une pièce 200 idéale. Comme détaillé ci-après, le système et procédé selon l'invention permettent de déterminer un modèle, dit modèle effectif MODE, reproduisant de manière plus fine et plus précise la pièce réelle que le modèle MODP. Dans un mode de réalisation possible de l'invention ce modèle effectif est à même de reproduire des défauts de positionnement entre différentes entités 3D composant la pièce par exemple entre la surface externe et une sous-partie constituant la pièce, par exemple une cavité interne ou un trou de perçage. Etant donné que la variation de forme des cavités a une incidence sur l'ensemble de la pièce et est à l'origine des défauts de forme critiques, ils sont ici considérés comme un cas particulier. Ainsi, dans la suite, une distinction est faite entre les cavités internes et les autres sous-parties, par exemple le trou de perçage.

Pour ce faire, le système et procédé selon l'invention considèrent les entités géométriques 3D permettant de représenter l'aube au moyen d'une description de leurs formes, leurs positions et leurs tailles. Plus précisément, les étapes E3a, E3b et E4 décrites ci-après exploitent un modèle de référence MODS de l'enveloppe de la pièce appelée par la suite surface externe de la pièce par exemple un modèle CAO, et, dans un mode de réalisation possible, un modèle de référence MODC d'une ou plusieurs cavités internes par exemple un modèle CAO. Ces étapes peuvent également exploiter des modèles d'autres sous-parties d'intérêt de la pièce par exemple sous la forme de modèles CAO déformables ou de modèles paramétriques. Ces étapes visent à estimer les positionnements, facteurs d'échelle et déformations affectant le modèle de référence MODP. Le cas échéant, ces étapes permettent également de déterminer les paramètres des modèles d'autres sous-parties d'intérêt pour caractériser leur géométrie par exemple une paroi interne caractérisée par sa position 3D et son épaisseur ou encore un trou de perçage caractérisé par son diamètre et sa profondeur.

On relèvera qu'il est notamment pertinent de dissocier la surface externe et les cavités internes lorsque la pièce est issue d'une fabrication en fonderie par cire perdue. En effet, la géométrie de la surface externe et celle des cavités internes sont alors engendrées par des éléments différents. La surface externe est ainsi directement liée à la métrologie du moule d'injection cire alors que les cavités sont à la fois liées à la métrologie du noyau et au système de blocage du noyau dans le moule d'injection cire. Dans ce cas, le modèle MODC peut correspondre au modèle de référence du noyau.

Dans une étape E3a, le procédé selon l'invention vient estimer un vecteur $\mu$ de paramètres de transformation du modèle de référence de la surface externe et, le cas échéant, du modèle de référence de la ou des cavités internes. Prenant l'exemple d'une transformation rigide du modèle de référence de la surface externe et du modèle de référence de la ou des cavités internes, on compte six degrés de liberté (trois translations et trois rotations) pour décrire le mouvement rigide de chaque modèle. Le vecteur $\mu$ comprend donc douze composantes : six pour une translation 3D de chaque modèle de référence et six pour la rotation 3D de chaque modèle de référence, par exemple via les angles d'Euler ou un quaternion.

Dans une étape optionnelle E3b, le procédé selon l'invention vient estimer un vecteur $\theta_j$ de paramètres géométriques d'une j-ème sous-partie d'intérêt de la pièce. Cette étape E3b est répétée pour chacune des sous-parties d'intérêt lorsque plusieurs d'entre elles sont considérées.

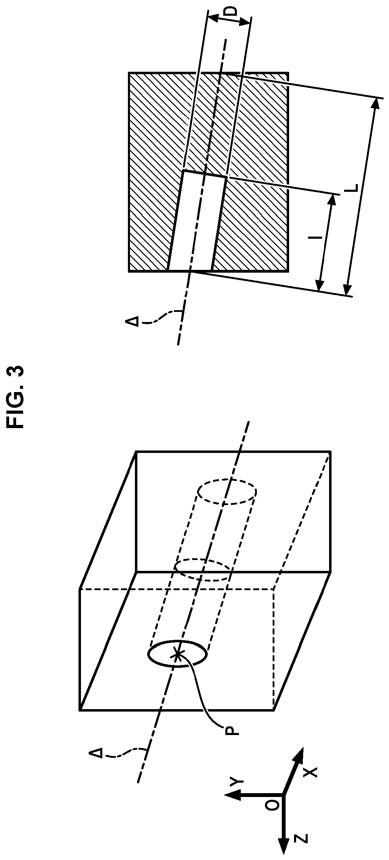

A titre d'exemple, la figure 3 représente un trou de perçage vue en perspective et en coupe dont une modélisation possible est celle d'un cylindre dont la forme est gouvernée par différents paramètres géométriques, par exemple le rayon, la longueur et les paramètres d'orientation de l'axe. Ces différents paramètres géométriques du trou de perçage correspondant à la sous-partie numéro j sont rassemblés dans le vecteur $\theta_j$.

Dans ce qui suit, on considère une mise en œuvre conjointe des étapes E3a et E3b. Dans ce cadre, l'invention vient déterminer le vecteur colonne $\mu$ de paramètres de transformation du modèle de référence de la surface externe et du modèle de référence de la ou des cavités internes, et les vecteurs colonnes $\theta_j$ de paramètres géométriques des différentes sous-parties d'intérêt. Les vecteurs $\theta_j$ sont rassemblés dans une liste $\theta$ tel que la j-ème entrée corresponde au vecteur $\theta_j$ pour la sous-partie numéro j.

La détermination de ces vecteurs est réalisée en exploitant une différence ou résidu $\rho^{(n)}$ entre $P^{(n)}$ la projection observée de la vue n et $\tilde{P}^{(n)}$ la projection simulée pour la même vue n qui s'exprime par exemple sous la forme suivante lorsque l'étape E2 de calibration a préalablement été mise en œuvre : $\rho^{(n)}(\boldsymbol{x}; \boldsymbol{p}, \boldsymbol{c}, \alpha, \mu, \theta) = P^{(n)}(\boldsymbol{x}) - \tilde{P}^{(n)}(\boldsymbol{x}; \boldsymbol{p}, \boldsymbol{c}, \alpha, \mu, \theta)$.

Une réalisation de $\tilde{P}^{(n)}$ est $\tilde{P}^{(n)}(\boldsymbol{x}; \boldsymbol{p}, \boldsymbol{c}, \alpha, \mu, \theta) = u(\hat{P}^{(n)}(\boldsymbol{x}; \boldsymbol{p}, \mu, \theta); \boldsymbol{c}) * K(\boldsymbol{x}; \alpha)$, avec $\hat{P}^{(n)}(\boldsymbol{x}; \boldsymbol{p}, \mu, \theta)$ la projection simulée de l'épaisseur de matière traversée pour la vue numéro n en utilisant le vecteur $\boldsymbol{p}$ de projection, les modèles de la pièce caractérisés par le vecteur $\mu$ et les modèles des sous-parties d'intérêt caractérisés par le vecteur $\theta$. Les vecteurs de paramètres $\boldsymbol{p}, \boldsymbol{c}, \alpha$ décrivent le modèle de la géométrie projective et le modèle d'artefact d'images. La fonction $u(y; \boldsymbol{c})$ qui vient corriger l'atténuation du rayonnement en fonction de la longueur traversée $y = \hat{P}^{(n)}(\boldsymbol{x}; \boldsymbol{p}, \mu, \theta)$ permet de caractériser l'effet du durcissement de faisceau de rayonnement, et la convolution avec le noyau de convolution $K(\boldsymbol{x}; \alpha)$ permet de caractériser l'effet de la diffusion Compton. Le calcul des vecteurs $\boldsymbol{p}, \boldsymbol{c}, \alpha$ optimaux est décrit ci-dessus en liaison avec l'article suscité.

L'étape E3a peut suivre un processus itératif comprenant à chacune de plusieurs itérations :

- la génération de premières projections simulées de la pièce $\tilde{P}^{(n)}(\boldsymbol{x}; \boldsymbol{p}, \boldsymbol{c}, \alpha, \mu, \theta_{ini})$ correspondant aux projections calculées à partir des images acquises selon les différents angles de projection, à partir du modèle de référence de la surface externe MODS, le cas échéant, du modèle de référence de la ou des cavités internes MODC et du vecteur $\mu$ de paramètres de transformation du modèle de référence de la surface externe et, le cas échéant, du modèle de référence de la cavité interne ;
- la détermination d'un écart entre les premières projections simulées et les projections calculées à partir des images acquises ;
- la modification du vecteur $\mu$ en vue de réduire ledit écart.

Ce processus itératif exploite une estimation initiale $\mu_{ini}$ du vecteur $\mu$, prise par exemple comme représentative d'une transformation identité des modèles de référence de la surface externe et de la ou des cavités internes. Dans ce qui précède, $\theta_{ini}$ désigne la liste regroupant les valeurs des paramètres géométriques des différentes sous-parties d'intérêt dans la pièce idéale.

A chacune des itérations, la détermination d'un écart entre les premières projections simulées et les projections calculées à partir des images acquises peut comprendre, pour chaque angle de projection, le calcul d'un résidu de projection, par exemple selon $\rho^{(n)}(\boldsymbol{x}; \boldsymbol{p}, \boldsymbol{c}, \alpha, \mu, \theta_{ini}) = P^{(n)}(\boldsymbol{x}) - \tilde{P}^{(n)}(\boldsymbol{x}; \boldsymbol{p}, \boldsymbol{c}, \alpha, \mu, \theta_{ini})$, correspondant à l'écart entre la première projection simulée $\tilde{P}^{(n)}$ pour cet angle de projection et la projection calculée $P^{(n)}$ à partir de l'image acquise $I^{(n)}$ pour cet angle de projection.

Par ailleurs, à chacune des itérations, la modification du vecteur $\mu$ peut comprendre :

- pour chaque angle de projection, le calcul de champs de sensibilité de la première projection simulée pour cet angle de projection à une variation des paramètres contenus dans le vecteur $\mu$ ;
- le calcul d'un vecteur correctif $\delta\mu^*$ comme étant le vecteur $\delta\mu$ minimisant un écart entre les résidus de projection et le produit de $\delta\mu$ par les champs de sensibilité;
- la mise à jour du vecteur $\mu$ en utilisant le vecteur correctif $\delta\mu^*$.

Le champ de sensibilité d'une projection simulée à une variation d'un paramètre $\mu_k$ du vecteur $\mu$ s'exprime par exemple selon $S^{(n)}(\boldsymbol{x}; \mu_k) = \dfrac{\partial \tilde{P}^{(n)}(\boldsymbol{x}; \boldsymbol{p}, c, \alpha, \mu, \theta_{ini})}{\partial \mu_k}$.

Le calcul du vecteur correctif $\delta\mu^*$ peut comprendre la minimisation de la somme sur les angles de projection des carrés des différences entre, pour chaque angle de projection, le résidu de projection calculé pour cet angle de projection et le produit de $\delta\mu$ par les champs de sensibilité calculés pour cet angle de projection. Ce vecteur correctif représente une erreur faite dans l'estimation des paramètres contenus dans le vecteur $\mu$ et fournit une quantité selon laquelle le vecteur $\mu$ doit être modifié pour réduire l'écart entre les projections simulées et les projections observées. Ainsi la mise à jour du vecteur $\mu$ en utilisant le vecteur correctif $\delta\mu^*$ à l'issue d'une itération peut être notée $\mu \leftarrow \mu + \delta\mu^*$.

Par exemple, le vecteur correctif $\delta\mu^*$ est donné par

$$\delta\boldsymbol{\mu}^* = \arg\min_{\delta\boldsymbol{\mu}} \sum_{(n)} \left\| w^{(n)}(\boldsymbol{x})(\rho^{(n)}(\boldsymbol{x};\ \boldsymbol{p}, \boldsymbol{c}, \boldsymbol{\alpha}, \boldsymbol{\mu}, \boldsymbol{\theta}_{ini}) - \boldsymbol{s}^{(n)}(\boldsymbol{x};\ \boldsymbol{\mu})\,\delta\boldsymbol{\mu}) \right\|^2$$

où $\boldsymbol{s}^{(n)}(\boldsymbol{x};\ \mu)$ est la matrice des champs de sensibilité $s^{(n)}(\boldsymbol{x};\ \mu_k)$ et $w^{(n)}(\boldsymbol{x})$ est un terme de pondération qui peut être utilisé pour prendre en compte des incertitudes locales par exemple dues au bruit ou aux pixels morts. L'invention n'est toutefois pas limitée à la résolution d'équations de la forme précédente, mais s'étend par exemple à des méthodes de régularisation, telles que la régularisation de Tikhonov, qui permettent d'introduire de l'*a priori* dans le problème.

Dans une mise en œuvre possible de l'étape E3b, chacune des itérations comprend en outre suite à la mise à jour du vecteur $\mu$ en utilisant le vecteur correctif $\delta\mu^*$ et pour chacune des sous-parties d'intérêt :

- la génération de deuxièmes projections simulées de la pièce correspondant aux projections calculées à partir des images acquises selon les différents angles de projection, à partir du modèle de référence de la surface externe MODS, le cas échéant, du modèle de référence de la ou des cavités internes MODC, du vecteur $\mu$ mis à jour en utilisant le vecteur correctif $\delta\mu^*$ et du vecteur $\theta_j$ des paramètres géométriques de la sous-partie d'intérêt numéro j en train d'être considérée ;
- la détermination d'un écart entre les deuxièmes projections simulées et les projections calculées à partir d'images acquises ;
- la modification du vecteur $\theta_j$ en vue de réduire ledit écart.

A chacune des itérations, la détermination d'un écart entre les deuxièmes projections simulées et les projections calculées à partir des images acquises peut comprendre, pour chaque angle de projection, le calcul d'un résidu de projection, par exemple selon $p^{(n)}(\boldsymbol{x}; \boldsymbol{p}, \boldsymbol{c}, \alpha, \mu, \theta_j) = P^{(n)}(\boldsymbol{x}) - \tilde{P}^{(n)}(\boldsymbol{x}; \boldsymbol{p}, \boldsymbol{c}, \alpha, \mu, \theta_j)$ correspondant à l'écart entre la deuxième projection simulée pour cet angle de projection et la projection calculée à partir de l'image acquise pour cet angle de projection.

Par ailleurs, à chacune des itérations, la modification du vecteur $\theta_j$ comprend :

- pour chaque angle de projection, le calcul de champs de sensibilité de la deuxième projection simulée pour cet angle de projection à une variation des paramètres contenus dans le vecteur $\theta_j$ ;
- le calcul d'un vecteur correctif $\delta\boldsymbol{\theta}_j^*$ comme étant le vecteur $\delta\theta_j$ minimisant un écart entre les résidus de projection et le produit de $\delta\theta_j$ par les champs de sensibilité;
- la mise à jour du vecteur $\theta_j$ en utilisant le vecteur correctif $\delta\boldsymbol{\theta}_j^*$.

Le champ de sensibilité d'une projection simulée à une variation d'un paramètre $\theta_{j,k}$ du vecteur $\theta_j$ s'exprime par exemple selon $s^{(n)}(\boldsymbol{x};\ \theta_{j,k}) = \dfrac{\partial \tilde{P}^{(n)}(\boldsymbol{x};\ \boldsymbol{p}, \boldsymbol{c}, \alpha, \mu, \theta_j)}{\partial \theta_{j,k}}$.

Le calcul du vecteur correctif $\delta\boldsymbol{\theta}_j^*$ peut comprendre la minimisation de la somme sur les angles de projection des carrés des différences entre, pour chaque angle de projection, le résidu de projection calculé pour cet angle de projection et le produit de $\delta\theta_j$ par les champs de sensibilité calculés pour cet angle de projection. Ce vecteur correctif représente une erreur faite dans l'estimation des paramètres contenus dans le vecteur $\theta_j$ et fournit une quantité selon laquelle le vecteur $\theta_j$ doit être modifié pour réduire l'écart entre les projections simulées et les projections calculées à partir d'images acquises. Ainsi la mise à jour du vecteur $\theta_j$ en utilisant le vecteur correctif $\delta\boldsymbol{\theta}_j^*$ à l'issue d'une itération peut être notée $\boldsymbol{\theta}_j \leftarrow \boldsymbol{\theta}_j + \delta\boldsymbol{\theta}_j^*$.

Par exemple, le vecteur correctif $\delta\boldsymbol{\theta}_j^*$ est donné par

$$\delta\theta_j^* = \arg\min_{\delta\theta_j} \sum_{(n)} \left\| v^{(n)}(x;\, j)\left(\rho^{(n)}(x;\, p, c, \alpha, \mu, \theta_j) - s^{(n)}(x;\, \theta_j)\, \delta\theta_j\right) \right\|^2$$

où $s^{(n)}(x;\, \theta_j)$ est la matrice des champs de sensibilité $s^{(n)}(x;\, \theta_{j,k})$ et $v^{(n)}(x;\, j)$ est un terme de pondération.

Les itérations sont arrêtées lorsqu'un critère est vérifié, par exemple lorsqu'un nombre maximal d'itérations est atteint, lorsque les résidus calculés à l'issue d'une itération sont inférieurs à un seuil donné ou encore lorsque la diminution de la valeur des résidus entre deux itérations successives est inférieure à un seuil donné.

Dans une réalisation possible de l'invention, des mesures d'incertitude sur la valeur des paramètres estimés peuvent être réalisées. Par exemple, une mesure d'incertitude sur les paramètres $\delta\theta_{j,i}^*$ du vecteur correctif $\boldsymbol{\delta\theta_j^*}$ est donnée par les coefficients de la matrice de covariance $\boldsymbol{C}$ de terme $C_{ik} = <\delta\theta_{j,i}^*,\ \delta\theta_{j,k}^*>$ dont la valeur va dépendre des hypothèses considérées, notamment concernant la nature et les caractéristiques de bruit. Le terme $\sqrt{C_{kk}}$ indique l'incertitude sur le k-ième paramètre lorsqu'il est considéré indépendamment des autres. Les termes non diagonaux de la matrice de covariance représentent les couplages entre les paramètres.

Ces mesures peuvent être calculées aussi bien pour les paramètres contenus dans le vecteur $\mu$ que sur les paramètres contenus dans le ou les vecteurs $\theta_j$.

Au cours d'une quatrième étape E4, le procédé selon l'invention comprend la détermination d'un modèle corrigé de la surface externe par transformation du modèle de référence de la surface externe au moyen du vecteur $\mu$ issu des itérations et, le cas échéant, la détermination d'un modèle corrigé de la ou des cavités internes par transformation du modèle de référence de la ou des cavités internes au moyen du vecteur $\mu$ issu des itérations. Le cas échéant, cette quatrième étape comprend en outre, pour chaque sous-partie d'intérêt, la détermination d'un modèle de la sous-partie d'intérêt au moyen du vecteur $\theta_j$ issu des itérations.

Notons ici *CAOS(v)* le modèle CAO de référence de la surface externe MODS, *CAOC(v)* le modèle CAO de référence de la ou des cavités internes MODC, et *CAOθ_j(v)* le modèle CAO de référence de la sous-partie numéro j MODθ_j, où $v \in \mathbb{R}^3$ est un point de contrôle de la CAO.

*CAOE(v),* le modèle CAO du modèle effectif MODE, est obtenu partir de *CAOS(v),* de *CAOC(v)* et des paramètres contenus dans le vecteur $\mu$, et le cas échéant de *CAOθ_j(v)* et des paramètres contenus dans les vecteurs $\theta_j$. Une réalisation du modèle *CAOE(v),* par exemple lors d'un procédé d'inspection de la pièce, est donné par ce qui suit.

Le modèle effectif *CAOSE(v)* de la surface externe correspondant au modèle corrigé *CAOS(T(v; μ_d))* et le modèle effectif *CAOCE(v)* de la ou des cavités internes correspondant au modèle corrigé *CAOC(T(v; μ_c))* sont issus de la transformation des modèles de référence en utilisant une transformation *T*, par exemple une transformation rigide et d'échelle, dépendant des paramètres contenus dans les vecteurs $\mu_d$ et $\mu_c$, tels que $\mu = (\mu_d,\ \mu_c)$.

Ces deux modèles effectifs *CAOSE(v)* et *CAOCE(v)* sont ensuite exploités pour déterminer *CAOE(v).* Par exemple, *CAOE(v) = différence (CAOSE(v), intersection(CAOSE(v), CAOCE(v)))* avec les opérations *différence* et *intersection* définies pour les modèles CAO.

Le cas échéant, le modèle effectif *CAOθ_jE(v)* de chaque sous-partie d'intérêt correspondant au modèle corrigé *CA0θ_j(T(v; θ_j))* est issu de la transformation du modèle de référence en utilisant une transformation *T* dépendant des paramètres contenus dans le vecteur $\theta_j$. Cette transformation dépend de la sous-partie considérée, par exemple l'augmentation de la longueur ou du rayon du cylindre dans le cas d'un trou de perçage tel que représenté dans la figure 3. A ce modèle effectif est associé un opérateur, noté $F_j$, modifiant *CAOE(v)* de sorte que $F_j$(*CAOE(v), CAOθ_jE(v)*) correspond au modèle effectif de la pièce modifié par le modèle effectif de la sous-partie numéro *j*. Par exemple, $F_j$(*CAOE (v), CAOθ_jE(v)) = différence (CAOE(v), intersection (CAOE(v), CAOθ_jE(v))* avec les opérations *différence* et *intersection* définies pour les modèles CAO, dans le cas d'un trou de perçage tel que représenté dans la figure 3.

Le procédé comprend par ailleurs une étape E5 de sanction de la pièce qui exploite le modèle effectif et les modèles effectifs de chaque sous-partie d'intérêt, par exemple de deux manières différentes, d'une part à partir d'informations directement issues du modèle effectif et des modèles effectifs de chaque sous-partie d'intérêt, et d'autre part à partir d'informations issues des différences entre projections simulées à l'aide des modèles effectifs et projections observées.

Des indicateurs géométriques qui caractérisent la géométrie de chaque sous-partie, peuvent être calculés à partir de son modèle effectif *CAOθ_jE(v)* et les incertitudes associées peuvent être comparés aux valeurs renseignées dans des documents de cotation afin de sanctionner chaque sous-partie.

Par ailleurs, une procédure de contrôle est appliquée sur le modèle effectif. Les valeurs obtenues sont comparées avec les valeurs de la procédure de contrôle appliquée sur le modèle de référence en tenant compte des tolérances. Cela permet un contrôle de parties d'intérêt a posteriori de l'identification des sous-parties.

Au cours de l'étape E5, le modèle effectif de la pièce et les paramètres contenus dans les vecteurs *p, c, α* optimaux décrivant la géométrie de projection et les artefacts d'images sont par ailleurs utilisés pour générer de nouvelles projections simulées et évaluer leurs écarts avec les projections observées. Le procédé comprend ainsi les étapes suivantes :

- la génération de troisièmes projections simulées de la pièce correspondant aux projections d'atténuation calculées à partir des images acquises selon les différents angles de projection, à partir du modèle effectif de la pièce ;
- la comparaison des projections calculées à partir des images acquises et des troisièmes projections simulées à partir du modèle effectif de la pièce.

En particulier, les différences entre les projections simulées à partir du modèle effectif de la pièce et les projections observées peuvent être comparées à un niveau de bruit présent dans une projection. Cette mesure a pour avantage de dépendre du pixel considéré. Si les différences sont inférieures au niveau de bruit, alors elles sont considérées comme non significatives. Dans le cas contraire, cela signifie que le modèle effectif n'a pas su capturer la variabilité de forme nécessaire à cette comparaison.

## Revendications

1. Procédé de contrôle non destructif d'une pièce (200) fondé sur une modélisation volumique de la pièce (200), comprenant :

   - l'acquisition (E1), par un dispositif de radiographie aux rayons X (100), d'images de la pièce selon différents angles de projection ($I^{(n)}$) ;
   - le calcul de projections à partir des images acquises selon les différents angles de projection ($P^{(n)}$) ;
   - à chacune de plusieurs itérations (E3a):

     ∘ la génération de premières projections simulées de la pièce correspondant aux projections calculées à partir des images acquises selon les différents angles de projection, à partir d'un modèle de référence d'une surface externe de la pièce (MODS) et d'un vecteur $\mu$ de paramètres de transformation du modèle de référence de la surface externe;
     ∘ la détermination d'un écart entre les premières projections simulées et les projections calculées à partir des images acquises, cette détermination comprenant, pour chaque angle de projection, le calcul d'un résidu de projection correspondant à l'écart entre la première projection simulée pour cet angle de projection et la projection calculée à partir de l'image acquise pour cet angle de projection ;

   - la modification du vecteur $\mu$ en vue de réduire ledit écart, cette modification comprenant :

     ∘ pour chaque angle de projection, le calcul de champs de sensibilité de la première projection simulée pour cet angle de projection à une variation des paramètres contenus dans le vecteur $\mu$ ;
     ∘ le calcul d'un vecteur correctif $\delta\mu^*$ comme étant le vecteur $\delta\mu$ minimisant un écart entre les résidus de projection et le produit de $\delta\mu$ par les champs de sensibilité;
     ∘ la mise à jour du vecteur $\mu$ en utilisant le vecteur correctif $\delta\mu^*$ ;

   - la détermination d'un modèle corrigé de la surface externe par transformation du modèle de référence de la surface externe au moyen du vecteur $\mu$ issu des itérations ;
   - la détermination (E4) d'un modèle effectif (MODE) de la pièce au moyen du modèle corrigé de la surface externe.

2. Procédé selon la revendication 1 :

   - dans lequel la génération, à chacune des itérations, des premières projections simulées, est également réalisée à partir d'un modèle de référence d'une ou plusieurs cavités internes de la pièce (MODC) et dans lequel le vecteur $\mu$ comprend également des paramètres de transformation du modèle de référence de la ou des cavités internes (MODC) ;
   - comprenant en outre la détermination d'un modèle corrigé de la ou des cavités internes par transformation du modèle de référence de la ou des cavités internes au moyen du vecteur $\mu$ issu des itérations; et
   - dans lequel la détermination (E4) du modèle effectif (MODE) de la pièce est également réalisée au moyen du modèle corrigé de la ou des cavités internes.

3. Procédé selon l'une des revendications 1 et 2, dans lequel le champ de sensibilité d'une projection simulée $\tilde{P}^{(n)}$ à une variation d'un paramètre $\mu_k$ du vecteur $\mu$ s'exprime selon $\dfrac{\partial \tilde{p}^{(n)}}{\partial \mu_k}$.

4. Procédé selon l'une des revendications 1 à 3, dans lequel le calcul du vecteur correctif $\delta\mu^*$ comprend la minimisation de la somme sur les angles de projection des normes au carré des différences pondérées entre, pour chaque angle de projection, le résidu de projection calculé pour cet angle de projection et le produit de $\delta\mu$ par les champs de sensibilité calculés pour cet angle de projection.

5. Procédé selon l'une des revendications 1 à 4, dans lequel chaque itération comprend en outre suite à la modification du vecteur $\mu$ :

> • la génération de deuxièmes projections simulées de la pièce correspondant aux projections calculées à partir des images acquises selon les différents angles de projection, à partir du modèle de référence de la surface externe (MODS), d'un modèle d'une sous-partie numéro j d'intérêt de la pièce (MOD$\theta_j$), du vecteur $\mu$ modifié et d'un vecteur $\theta_j$ de paramètres géométriques de la sous-partie numéro j d'intérêt de la pièce ;
> • la détermination d'un écart entre les deuxièmes projections simulées et les projections calculées à partir des images acquises ;
> • la modification du vecteur $\theta_j$ en vue de réduire ledit écart.

6. Procédé selon la revendication 5, dans lequel à chacune des itérations :

> • la détermination d'un écart entre les deuxièmes projections simulées et les projections calculées à partir des images acquises comprend, pour chaque angle de projection, le calcul d'un résidu de projection correspondant à l'écart entre la deuxième projection simulée pour cet angle de projection et la projection calculée à partir de l'image acquise pour cet angle de projection ; et
> • la modification du vecteur $\theta_j$ comprend :
>
> > ◦ pour chaque angle de projection, le calcul de champs de sensibilité de la deuxième projection simulée pour cet angle de projection à une variation des paramètres contenus dans le vecteur $\theta_j$ ;
> > ◦ le calcul d'un vecteur correctif $\boldsymbol{\delta\theta_j^*}$ comme étant le vecteur $\delta\theta_j$ minimisant un écart entre les résidus de projection et le produit de $\delta\theta_j$ par les champs de sensibilité;
> > ◦ la mise à jour du vecteur $\theta_j$ en utilisant le vecteur correctif $\boldsymbol{\delta\theta_j^*}$ .

7. Procédé selon la revendication 6, dans lequel le calcul du vecteur correctif $\boldsymbol{\delta\theta_j^*}$ comprend la minimisation de la somme sur les angles de projection des normes au carré des différences pondérées entre, pour chaque angle de projection, le résidu de projection calculé pour cet angle de projection et le produit de $\delta\theta_j$ par les champs de sensibilité calculés pour cet angle de projection.

8. Procédé selon l'une des revendication 5 à 7, comprenant en outre la détermination d'un modèle corrigé de la sous-partie d'intérêt numéro j par transformation du modèle de référence de la sous-partie d'intérêt numéro j au moyen du vecteur $\theta_j$ issu des itérations et dans lequel la détermination (E4) du modèle effectif (MODE) de la pièce est également réalisée au moyen du modèle corrigé de la sous-partie d'intérêt numéro j.

9. Procédé selon l'une des revendications 1 à 8, dans lequel la génération des premières projections simulées est en outre réalisée à partir d'un vecteur $p$ de paramètres caractérisant la géométrie de projection de l'acquisition.

10. Procédé selon la revendication 9, comprenant en outre, au moyen d'un vecteur de paramètres d'un modèle d'artefacts d'image, une correction d'artefacts dans les projections calculées à partir des images acquises ou une génération d'artefacts dans les premières projections simulées.

11. Procédé selon l'une des revendications 1 à 10, comprenant en outre une sanction de la pièce au moyen du modèle effectif de la pièce.

12. Procédé selon la revendication 11, dans lequel la sanction de la pièce comprend :

• la génération de troisièmes projections simulées de la pièce correspondant aux projections calculées à partir des images acquises selon les différents angles de projection, à partir du modèle effectif de la pièce ;
• la comparaison des projections calculées à partir des images acquises et des troisièmes projections simulées à partir du modèle effectif de la pièce.

**13.** Système de contrôle non destructif fondé sur une modélisation volumique d'une pièce, comprenant :

- un dispositif de radiographie aux rayons X apte à acquérir des images d'atténuation de la pièce selon différents angles de projection ; et
- un processeur configuré pour effectuer les étapes suivantes :

• calcul de projections à partir des images acquises selon les différents angles de projection ;
• à chacune de plusieurs itérations :

○ génération de premières projections simulées de la pièce correspondant aux projections calculées à partir des images acquises selon les différents angles de projection, à partir d'un modèle de référence d'une surface externe de la pièce et d'un vecteur $\mu$ de paramètres de transformation du modèle de référence de la surface externe;
○ détermination d'un écart entre les premières projections simulées et les projections calculées à partir des images acquises, cette détermination comprenant, pour chaque angle de projection, le calcul d'un résidu de projection correspondant à l'écart entre la première projection simulée pour cet angle de projection et la projection calculée à partir de l'image acquise pour cet angle de projection ;

• modification du vecteur $\mu$ en vue de réduire ledit écart, cette modification comprenant :

○ pour chaque angle de projection, le calcul de champs de sensibilité de la première projection simulée pour cet angle de projection à une variation des paramètres contenus dans le vecteur $\mu$ ;
○ le calcul d'un vecteur correctif $\delta\mu^*$ comme étant le vecteur $\delta\mu$ minimisant un écart entre les résidus de projection et le produit de $\delta\mu$ par les champs de sensibilité;
○ la mise à jour du vecteur $\mu$ en utilisant le vecteur correctif $\delta\mu^*$ ;
• détermination d'un modèle corrigé de la surface externe par transformation du modèle de référence de la surface externe au moyen du vecteur $\mu$ issu des itérations ;
• détermination d'un modèle effectif de la pièce au moyen du modèle corrigé de la surface externe.

**14.** Produit programme d'ordinateur comprenant des instructions qui, lorsque le programme est exécuté par un ordinateur, conduisent celui-ci à mettre en œuvre les étapes suivantes :

• réception d'images d'une pièce acquises selon différents angles de projection par un dispositif de radiographie aux rayons X ;
• calcul de projections à partir des images acquises selon les différents angles de projection ;
• à chacune de plusieurs itérations :

○ génération de premières projections simulées de la pièce correspondant aux projections calculées à partir des images acquises selon les différents angles de projection, à partir d'un modèle de référence d'une surface externe de la pièce et d'un vecteur $\mu$ de paramètres de transformation du modèle de référence de la surface externe;
○ détermination d'un écart entre les premières projections simulées et les projections calculées à partir des images acquises, cette détermination comprenant, pour chaque angle de projection, le calcul d'un résidu de projection correspondant à l'écart entre la première projection simulée pour cet angle de projection et la projection calculée à partir de l'image acquise pour cet angle de projection ;

• modification du vecteur $\mu$ en vue de réduire ledit écart, cette modification comprenant :

○ pour chaque angle de projection, le calcul de champs de sensibilité de la première projection simulée pour cet angle de projection à une variation des paramètres contenus dans le vecteur $\mu$ ;
○ le calcul d'un vecteur correctif $\delta\mu^*$ comme étant le vecteur $\delta\mu$ minimisant un écart entre les résidus de projection et le produit de $\delta\mu$ par les champs de sensibilité;
○ la mise à jour du vecteur $\mu$ en utilisant le vecteur correctif $\delta\mu^*$ ;

• détermination d'un modèle corrigé de la surface externe par transformation du modèle de référence de la surface externe au moyen du vecteur $\mu$ issu des itérations ;
• détermination d'un modèle global de la pièce au moyen du modèle corrigé de la surface externe.

**Patentansprüche**

1. Verfahren zum zerstörungsfreien Überprüfen eines Werkstücks (200) basierend auf einer Volumenmodellierung des Werkstücks (200), umfassend:

   • Erfassen (E1), durch eine Röntgen-Radiographie-Vorrichtung (100), von Bildern des Werkstücks aus verschiedenen Projektionswinkeln ($I^{(n)}$);
   • Berechnen von Projektionen aus den Bildern, die aus den verschiedenen Projektionswinkeln ($P^{(n)}$) erfasst werden;
   • bei jeder von mehreren Iterationen (E3a):

   ◦ Generieren von ersten simulierten Projektionen des Werkstücks, die den Projektionen entsprechen, die aus den Bildern berechnet werden, die aus den verschiedenen Projektionswinkeln erfasst werden, ausgehend von einem Referenzmodell einer externen Oberfläche des Werkstücks (MODS) und einem Vektor $\mu$ von Transformationsparametern des Referenzmodells der externen Oberfläche;
   ◦ Bestimmen einer Abweichung zwischen den ersten simulierten Projektionen und den Projektionen, die aus den erfassten Bildern berechnet werden, wobei dieses Bestimmen für jeden Projektionswinkel das Berechnen eines Projektionsresiduums umfasst, welcher der Abweichung zwischen der ersten Projektion, die für diesen Projektionswinkel simuliert wird, und der Projektion, die aus dem Bild berechnet wird, das für diesen Projektionswinkel erfasst wird, entspricht;

   • Abändern des Vektors $\mu$, um die Abweichung zu reduzieren, wobei das Abändern umfasst:

   ◦ für jeden Projektionswinkel, Berechnen von Empfindlichtkeitsbereichen der ersten Projektion, die für diesen Projektionswinkel simuliert wird, bei einer Variation der Parameter, die in dem Vektor $\mu$ enthalten sind;
   ◦ Berechnen eines Korrekturvektors $\delta\mu^*$ als den Vektor $\delta\mu$, der eine Abweichung zwischen den Projektionsresiduen und dem Produkt aus $\delta\mu$ mal den Empfindlichtkeitsbereichen minimiert;
   ◦ Aktualisieren des Vektors $\mu$ unter Verwendung des Korrekturvektors $\delta\mu^*$ ;

   • Bestimmen eines korrigierten Modells der externen Oberfläche durch Transformation des Referenzmodells der externen Oberfläche anhand des Vektors $\mu$, der der sich aus den Iterationen ergibt hervorgeht;
   • Bestimmen (E4) eines effektiven Modells (MODE) des Werkstücks anhand des korrigierten Modells der externen Oberfläche.

2. Verfahren nach Anspruch 1:

   - wobei das Generieren, bei jeder der Iterationen, der ersten simulierten Projektionen ebenfalls ausgehend von einem Referenzmodell einer oder mehrerer interner Hohlräume des Werkstücks (MODC) durchgeführt wird, und wobei der Vektor $\mu$ ebenfalls Transformationsparameter des Referenzmodells des oder der internen Hohlräume (MODC) umfasst;
   - ferner umfassend das Bestimmen eines korrigierten Modells des oder der internen Hohlräume durch Transformation des Referenzmodells des oder der internen Hohlräume anhand des Vektors $\mu$, der sich aus den Iterationen ergibt; und
   - wobei das Bestimmen (E4) des effektiven Modells (MODE) des Werkstücks ebenfalls anhand des korrigierten Modells des oder der internen Hohlräume durchgeführt wird.

3. Verfahren nach einem der Ansprüche 1 und 2, wobei der Empfindlichkeitsbereich einer simulierten Projektion $\tilde{P}^{(n)}$ bei einer Variation eines Parameters $\mu_k$ des Vektors $\mu$ gemäß $\dfrac{\partial \tilde{P}^{(n)}}{\partial \mu_k}$ ausgedrückt wird.

4. Verfahren nach einem der Ansprüche 1 bis 3, wobei das Berechnen des Korrekturvektors $\delta\mu^*$ das Minimieren der Summe über die Projektionswinkel der Quadratnormen der gewichteten Differenzen zwischen, für jeden Projektionswinkel, dem Projektionsresiduum, das für diesen Projektionswinkel berechnet wird, und dem Produkt von $\delta\mu$ mal den Empfindlichkeitsbereichen, die für diesen Projektionswinkel berechnet werden, umfasst.

5. Verfahren nach einem der Ansprüche 1 bis 4, wobei jede Iteration ferner infolge der Abänderung des Vektors $\mu$ umfasst:

   • Generieren von zweiten simulierten Projektionen des Werkstücks, die den Projektionen entsprechen, die aus den Bildern berechnet werden, die aus verschiedenen Projektionswinkeln erfasst werden, ausgehend von dem Referenzmodell der externen Oberfläche (MODS), einem Modell eines interessierenden Unterabschnitts Nummer $j$ des Werkstücks ($MOD\theta_j$), dem abgeänderten Vektor $\mu$ und einem Vektor $\theta_j$ von geometrischen Parametern des interessierenden Unterabschnitts Nummer $j$ des Werkstücks;
   • Bestimmen einer Abweichung zwischen den zweiten simulierten Projektionen und den Projektionen, die aus erfassten Bildern berechnet werden;
   • Abändern des Vektors $\theta_j$, um die Abweichung zu reduzieren.

6. Verfahren nach Anspruch 5, wobei bei jeder der Iterationen:

   • das Bestimmen einer Abweichung zwischen den zweiten simulierten Projektionen und den Projektionen, die aus den erfassten Bildern berechnet werden, für jeden Projektionswinkel das Berechnen eines Projektionsresiduums, das der Abweichung zwischen der zweiten simulierten Projektion für diesen Projektionswinkel und der Projektion, die aus dem erfassten Bild für diesen Projektionswinkel berechnet wird, entspricht, umfasst; und
   • das Abändern des Vektors $\theta_j$ umfasst:

      ◦ für jeden Projektionswinkel, Berechnen von Empfindlichkeitsbereichen der zweiten simulierten Projektion für diesen Projektionswinkel bei einer Variation der Parameter, die in dem Vektor $\theta_j$ enthalten sind;

      ◦ Berechnen eines Korrekturvektors $\delta\theta_j^*$ als den Vektor $\delta\theta_j$, der eine Abweichung zwischen den Projektionsresiduen und dem Produkt von $\delta\theta_j$ mal den Empfindlichkeitsbereichen minimiert;

      ◦ Aktualisieren des Vektors $\theta_j$ unter Verwendung des Korrekturvektors $\delta\theta_j^*$.

7. Verfahren nach Anspruch 6, wobei das Berechnen des Korrekturvektors $\delta\theta_j^*$ das Minimieren der Summe über die Projektionswinkel der Quadratnormen der gewichteten Differenzen zwischen, für jeden Projektionswinkel, dem Projektionsresiduum, das für diesen Projektionswinkel berechnet wird, und dem Produkt von $\delta\theta_j$ mal den Empfindlich- keitsbereichen, die für diesen Projektionswinkel berechnet werden.

8. Verfahren nach einem der Ansprüche 5 bis 7, ferner umfassend das Bestimmen eines korrigierten Modells des interessierenden Teilabschnitts Nummer $j$ durch Transformation des Referenzmodells des interessierenden Unterabschnitts Nummer $j$ anhand des Vektors $\theta_j$, der aus den Iterationen hervorgeht, und wobei das Bestimmen (E4) des effektiven Modells (MODE) des Werkstücks ebenfalls anhand des korrigierten Modells des interessierenden Unterabschnitts Nummer $j$ durchgeführt wird.

9. Verfahren nach einem der Ansprüche 1 bis 8, wobei das Generieren der ersten simulierten Projektionen ferner ausgehend von einem Vektor $p$ von Parametern, welche die Projektionsgeometrie der Erfassung kennzeichnen, durchgeführt wird.

10. Verfahren nach Anspruch 9, ferner umfassend, anhand eines Vektors von Parametern eines Modells von Bildartefakten, das Korrigieren von Artefakten in den Projektionen, die aus den erfassten Bildern berechnet werden, oder das Generieren von Artefakten in den ersten simulierten Projektionen.

11. Verfahren nach einem der Ansprüche 1 bis 10, ferner umfassend eine Sanktion des Werkstücks anhand des effektiven Modells des Werkstücks.

12. Verfahren nach Anspruch 11, wobei die Sanktion des Werkstücks umfasst:

   • Generieren von dritten simulierten Projektionen des Werkstücks, die den Projektionen entsprechen, die aus den Bildern berechnet werden, die aus den verschiedenen Projektionswinkeln erfasst werden, ausgehend von dem effektiven Modell des Werkstücks;

• Vergleichen der Projektionen, die aus den erfassten Bildern berechnet werden, und der dritten Projektionen, die ausgehend von dem effektiven Modell des Werkstücks simuliert werden.

13. System zum zerstörungsfreien Überprüfen basierend auf einer Volumenmodellierung eines Werkstücks, umfassend:

- eine Röntgen-Radiographie-Vorrichtung, die dazu geeignet ist, Abschwächungsbilder des Werkstücks aus verschiedenen Projektionswinkeln zu erfassen; und
- einen Prozessor, der dazu konfiguriert ist, folgende Schritte auszuführen:

• Berechnen von Projektionen aus den Bildern, die aus verschiedenen Projektionswinkeln erfasst werden;
• bei jeder von mehreren Iterationen:

◦ Generieren von ersten simulierten Projektionen des Werkstücks, die den Projektionen entsprechen, die aus den Bildern berechnet werden, die aus den verschiedenen Projektionswinkeln erfasst werden, ausgehend von einem Referenzmodell einer externen Oberfläche des Werkstücks und einem Vektor $\mu$ von Transformationsparametern des Referenzmodells der externen Oberfläche;
◦ Bestimmen einer Abweichung zwischen den ersten simulierten Projektionen und den Projektionen, die aus den erfassten Bildern berechnet werden, wobei das Bestimmen für jeden Projektionswinkel das Berechnen eines Projektionsresiduums umfasst, das der Abweichung zwischen der ersten Projektion, die für diesen Projektionswinkel simuliert wird, und der Projektion, die aus dem Bild, das für diesen Projektionswinkel erfasst wird, berechnet wird, entspricht;

• Abändern des Vektors $\mu$, um die Abweichung zu reduzieren, wobei das Abändern umfasst:

◦ für jeden Projektionswinkel, Berechnen von Empfindlichtkeitsbereichen der ersten Projektion, die für diesen Projektionswinkel simuliert wird, bei einer Variation der Parameter, die in dem Vektor $\mu$ enthalten sind;
◦ Berechnen eines Korrekturvektors $\delta\mu^*$ als den Vektor $\delta\mu$, der eine Abweichung zwischen den Projektionsresiduen und dem Produkt aus $\delta\mu$ mal den Empfindlichtkeitsbereichen minimiert;
◦ Aktualisieren des Vektors $\mu$ unter Verwendung des Korrekturvektors $\delta\mu^*$ ;

• Bestimmen eines korrigierten Modells der externen Oberfläche durch Transformation des Referenzmodells der externen Oberfläche anhand des Vektors $\mu$, der sich aus den Iterationen ergibt;
• Bestimmen eines effektiven Modells des Werkstücks anhand des korrigierten Modells der externen Oberfläche.

14. Computerprogrammprodukt, umfassend Anweisungen, die, wenn das Programm von einem Computer ausgeführt wird, bewirken, dass dieser folgende Schritte umsetzt:

• Empfangen von Bildern eines Werkstücks, die aus verschiedenen Projektionswinkeln von einer Röntgen-Radiographie-Vorrichtung erfasst werden;
• Berechnen von Projektionen aus den Bildern, die aus verschiedenen Projektionswinkeln erfasst werden;
• bei jeder von mehreren Iterationen:

◦ Generieren von ersten simulierten Projektionen des Werkstücks, die den Projektionen entsprechen, die aus den Bildern berechnet werden, die aus den verschiedenen Projektionswinkeln erfasst werden, ausgehend von einem Referenzmodell einer externen Oberfläche des Werkstücks und einem Vektor $\mu$ von Transformationsparametern des Referenzmodells der externen Oberfläche;
◦ Bestimmen einer Abweichung zwischen den ersten simulierten Projektionen und den Projektionen, die aus den erfassten Bildern berechnet werden, wobei dieses Bestimmen für jeden Projektionswinkel das Berechnen eines Projektionsresiduums umfasst, das der Abweichung zwischen der ersten Projektion, die für diesen Projektionswinkel simuliert wird, und der Projektion, die aus dem Bild berechnet wird, das für diesen Projektionswinkel erfasst wird;

• Abändern des Vektors $\mu$, um die Abweichung zu reduzieren, wobei dieses Abändern umfasst:

◦ für jeden Projektionswinkel, Berechnen von Empfindlichtkeitsbereichen der ersten Projektion, die für diesen Projektionswinkel simuliert wird, bei einer Variation der Parameter, die in dem Vektor $\mu$ enthalten sind;

◦ Berechnen eines Korrekturvektors $\delta\mu^*$ als den Vektor $\delta\mu$, der eine Abweichung zwischen den Projektionsresiduen und dem Produkt aus $\delta\mu$ mal den Empfindlichkeitsbereichen minimiert;
◦ Aktualisieren des Vektors $\mu$ unter Verwendung des Korrekturvektors $\delta\mu^*$;

• Bestimmen eines korrigierten Modells der externe Oberfläche durch Transformation des Referenzmodells der externen Oberfläche anhand des Vektors $\mu$, der sich aus den Iterationen ergibt;
• Bestimmen eines globalen Modells des Werkstücks anhand des korrigierten Modells der externen Oberfläche.

**Claims**

1. A method of non-destructive testing of a part (200) based on a volume modeling of the part (200), comprising:

   • the acquisition (E1), by an X-ray radiography device (100), of images of the part from different projection angles ($I^{(n)}$);
   • the computation of projections based on the images acquired from the different projection angles ($P^{(n)}$);
   • at each of several iterations (E3a):

      ◦ the generation of first simulated projections of the part corresponding to the projections computed based on the images acquired from the different projection angles, based on a reference model of an outer surface of the part (MODS) and on a vector $\mu$ of parameters of transformation of the reference model of the outer surface;
      ◦ the determination of a discrepancy between the first simulated projections and the projections computed based on the acquired images, this determination comprising, for each projection angle, the computation of a projection residual corresponding to the discrepancy between the first simulated projection for this projection angle and the projection computed based on the image acquired for this projection angle;

   • the modification of the vector $\mu$ for the purpose of reducing said discrepancy, this modification comprising:

      ◦ for each projection angle, the computation of fields of sensitivity of the first simulated projection for this projection angle to a variation of the parameters contained in the vector $\mu$;
      ◦ the computation of a corrective vector $\delta\mu^*$ as being the vector $\delta\mu$ minimizing a discrepancy between the projection residuals and the product of $\delta\mu$ multiplied by the sensitivity fields;
      ◦ the updating of the vector $\mu$ using the corrective vector $\delta\mu^*$;

   • the determination of a corrected model of the outer surface by transformation of the reference model of the outer surface by means of the vector $\mu$ resulting from the iterations;
   • the determination (E4) of an effective model (MODE) of the part by means of the corrected model of the outer surface.

2. The method as claimed in claim 1:

   - wherein the generation, at each of the iterations, of the first simulated projections is also done based on a reference model of one or more inner cavities of the part (MODC) and wherein the vector $\mu$ also comprises parameters of transformation of the reference model of the inner cavity or cavities (MODC);
   - further comprising the determination of a corrected model of the inner cavity or cavities by transformation of the reference model of the inner cavity or cavities by means of the vector $\mu$ resulting from the iterations; and
   - wherein the determination (E4) of the effective model (MODE) of the part is also done by means of the corrected model of the inner cavity or cavities.

3. The method as claimed in one of claims 1 and 4, wherein the field of sensitivity of a simulated projection $\tilde{P}^{(n)}$ to a variation of a parameter $\mu_k$ of the vector $\mu$ is $\dfrac{\partial \tilde{P}^{(n)}}{\partial \mu_k}$.

4. The method as claimed in one of claims 1 to 3, wherein the computation of the corrective vector $\delta\mu^*$ comprises the minimization of the sum over the projection angles of the squared norms of the weighted differences between, for each projection angle, the projection residual computed for this projection angle and the product of $\delta\mu$ multiplied by the

sensitivity fields computed for this projection angle.

5. The method as claimed in one of claims 1 to 4, wherein each iteration further comprises following the modification of the vector $\mu$:

    • the generation of second simulated projections of the part corresponding to the projections computed based on the images acquired from the different projection angles, based on the reference model of the outer surface (MODS), on a model of a sub-part number $j$ of interest of the part (MOD$\theta_j$), on the modified vector $\mu$ and on a vector $\theta_j$ of geometrical parameters of the sub-part number $j$ of interest of the part;

    • the determination of a discrepancy between the second simulated projections and the projections computed based on the acquired images;

    • the modification of the vector $\theta_j$ for the purpose of reducing said discrepancy.

6. The method as claimed in claim 5, wherein at each of the iterations:

    • the determination of a discrepancy between the second simulated projections and the projections computed based on the acquired images comprises, for each projection angle, the computation of a projection residual corresponding to the discrepancy between the second simulated projection for this projection angle and the projection computed based on the image acquired for this projection angle; and

    • the modification of the vector $\theta_j$ comprises:

        ◦ for each projection angle, the computation of fields of sensitivity of the second simulated projection for this projection angle to a variation of the parameters contained in the vector $\theta_j$;

        ◦ the computation of a corrective vector $\delta\theta_j^*$ as being the vector $\delta\theta_j$ minimizing a discrepancy between the projection residuals and the product of $\delta\theta_j$ multiplied by the sensitivity fields;

        ◦ the updating of the vector $\theta_j$ using the corrective vector $\delta\theta_j^*$.

7. The method as claimed in claim 6, wherein the computation of the corrective vector $\delta\theta_j^*$ comprises the minimization of the sum over the projection angles of the squared norms of the weighted differences between, for each projection angle, the projection residual computed for this projection angle and the product of $\delta\theta_j$ multiplied by the sensitivity fields computed for this projection angle.

8. The method as claimed in one of claims 5 to 7, further comprising the determination of a corrected model of the sub-part of interest number j by transformation of the reference model of the sub-part of interest number j by means of the vector $\theta_j$ resulting from the iterations and wherein the determination (E4) of the effective model (MODE) of the part is also done by means of the corrected model of the sub-part of interest number $j$.

9. The method as claimed in one of claims 1 to 8, wherein the generation of the first simulated projections is furthermore done based on a vector **p** of parameters characterizing the projection geometry of the acquisition.

10. The method as claimed in claim 9, further comprising, by means of a vector of parameters of a model of image artifacts, a correction of artefacts in the projections computed based on the acquired images or a generation of artifacts in the first simulated projections.

11. The method as claimed in one of claims 1 to 10, further comprising a validation of the part by means of the effective model of the part.

12. The method as claimed in claim 11, wherein the validation of the part comprises:

    • the generation of third simulated projections of the part corresponding to the projections computed based on the images acquired from the different projection angles, based on the effective model of the part;

    • the comparison of the projections computed based on the acquired images and the third simulated projections based on the effective model of the part.

13. A system of non-destructive testing based on the volume modeling of a part, comprising:

- an X-ray radiography device capable of acquiring images of attenuation of the part from different projection angles; and
- a processor configured to carry out the following steps:

- computation of projections based on the images acquired from the different projection angles;
- at each of several iterations:

  ◦ generation of first simulated projections of the part corresponding to the projections computed based on the images acquired from the different projection angles, based on a reference model of an outer surface of the part and on a vector $\mu$ of parameters of transformation of the reference model of the outer surface;
  ◦ determination of a discrepancy between the first simulated projections and the projections computed based on the acquired images, this determination comprising, for each projection angle, the computation of a projection residual corresponding to the discrepancy between the first simulated projection for this projection angle and the projection computed based on the image acquired for this projection angle;

- modification of the vector $\mu$ for the purpose of reducing said discrepancy, this modification comprising:

  ◦ for each projection angle, the computation of fields of sensitivity of the first simulated projection for this projection angle to a variation of the parameters contained in the vector $\mu$;
  ◦ the computation of a corrective vector $\delta\mu^*$ as being the vector $\delta\mu$ minimizing a discrepancy between the projection residuals and the product of $\delta\mu$ multiplied by the sensitivity fields;
  ◦ the updating of the vector $\mu$ using the corrective vector $\delta\mu^*$ ;

- determination of a corrected model of the outer surface by transformation of the reference model of the outer surface by means of the vector $\mu$ resulting from the iterations;
- determination of an effective model of the part by means of the corrected model of the outer surface.

14. A computer program product comprising instructions which, when the program is executed by a computer, lead this computer to implement the following steps:

- receiving of images of a part acquired from different projection angles by an X-ray radiography device;
- computation of projections based on the images acquired from the different projection angles;
- at each of several iterations:

  ◦ generation of first simulated projections of the part corresponding to the projections computed based on the images acquired from the different projection angles, based on a reference model of an outer surface of the part and on a vector $\mu$ of parameters of transformation of the reference model of the outer surface;
  ◦ determination of a discrepancy between the first simulated projections and the projections computed based on the acquired images, this determination comprising, for each projection angle, the computation of a projection residual corresponding to the discrepancy between the first simulated projection for this projection angle and the projection computed based on the image acquired for this projection angle;

- modification of the vector $\mu$ for the purpose of reducing said discrepancy, this modification comprising:

  ◦ for each projection angle, the computation of fields of sensitivity of the first simulated projection for this projection angle to a variation of the parameters contained in the vector $\mu$;
  ◦ the computation of a corrective vector $\delta\mu^*$ as being the vector $\delta\mu$ minimizing a discrepancy between the projection residuals and the product of $\delta\mu$ multiplied by the sensitivity fields;
  ◦ the updating of the vector $\mu$ using the corrective vector $\delta\mu^*$ ;

- determination of a corrected model of the outer surface by transformation of the reference model of the outer surface by means of the vector $\mu$ resulting from the iterations;
- determination of an overall model of the part by means of the corrected model of the outer surface.

## FIG. 1

EP 4 522 982 B1

## FIG. 2

EP 4 522 982 B1

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018014138 A1

**Littérature non-brevet citée dans la description**

- CAD-based X-ray CT calibration and error compensation.. **CÉDRIC FRAGNAUD et al.** Measurement Science and Technology. IOP Publishing, 2022, vol. 33, 065024